# EUROPEAN PATENT APPLICATION

(11) **EP 4 811 203 A1**
(43) Date of publication of application: **23.09.2026**
(21) Application number: 26160875.6
(22) Date of filing: 26.02.2026
(51) Int. Cl.: G06F 30/392, G06F 30/394

(54) **METHOD, APPARATUS, ELECTRONIC DEVICE, AND PRODUCT FOR DETERMINING CIRCUIT ELEMENT LAYOUT**

(30) Priority: 17.03.2025 CN 202510314777
(71) Applicant: Robert Bosch GmbH, 70442 Stuttgart (DE)
(72) Inventor: LU, Siliang, Shanghai 200335 (CN); HU, Tingkai, Shanghai 200335 (CN)

(57) **Abstract**

The present disclosure relates to a method, apparatus, electronic device, and product for determining a circuit element layout. The method includes determining multiple candidate layouts for multiple circuit elements based on layout information of the multiple circuit elements in a printed circuit board (PCB). The method further includes determining respective multiple wiring lengths, multiple element overlap areas, and multiple wiring congestion levels for the multiple candidate layouts. The method further includes determining a target layout from the multiple candidate layouts based on the multiple wiring lengths, the multiple element overlap areas, and the multiple wiring congestion levels.

## Description

### Technical Field

The present disclosure relates to the field of circuits, and more specifically, to a method, apparatus, electronic device, and product for determining a circuit element layout.

### Background Art

In the field of circuit design, circuit design, such as the placement and layout of circuits, is crucial. Layout refers to the relative positions and connections of circuit elements on a chip or circuit board. A good layout can ensure circuit performance, reliability, and manufacturability. Due to the dramatic increase in circuit scale and limitations imposed by complexity and design constraints, manual layout design has become difficult and time-consuming.

In this regard, various design assistance tools exist in related technologies, such as Electronic Design Automation (EDA) tools. EDA tools encompass a field comprising software, hardware, and services, aimed at assisting in the definition, planning, design, implementation, verification, and subsequent manufacturing of semiconductor devices or chips.

### Summary of the Invention

In a first aspect of the present disclosure, a method for determining a circuit element layout is provided. The method includes determining multiple candidate layouts for multiple circuit elements based on layout information of the multiple circuit elements in a printed circuit board (PCB). The method further includes determining respective multiple wiring lengths, multiple element overlap areas, and multiple wiring congestion levels for the multiple candidate layouts. The method further includes determining a target layout from the multiple candidate layouts based on the multiple wiring lengths, the multiple element overlap areas, and the multiple wiring congestion levels.

In a second aspect of the present disclosure, an apparatus for determining a circuit element layout is provided, comprising a candidate layout determination module configured to determine multiple candidate layouts for multiple circuit elements based on layout information of the multiple circuit elements in a printed circuit board (PCB). The apparatus further comprises a layout parameter determination module configured to determine respective multiple wiring lengths, multiple element overlap areas, and multiple wiring congestion levels for the multiple candidate layouts. The apparatus further comprises a target layout determination module configured to determine a target layout from the multiple candidate layouts based on the multiple wiring lengths, the multiple element overlap areas, and the multiple wiring congestion levels.

According to a third aspect of the present disclosure, an electronic device is provided. It includes: At least one processor; and a memory, coupled to the at least one processor and having instructions stored thereon, wherein the instructions, when executed by the at least one processor, cause the electronic device to perform the method according to the first aspect of the present disclosure.

In a fourth aspect of the present disclosure, a computer program product is provided. The computer program product comprises computer-executable instructions, wherein the computer-executable instructions are executed by a processor to implement the method provided according to the first aspect of the present disclosure.

In a fifth aspect of the present disclosure, a computer-readable storage medium is provided. The computer-readable storage medium has computer-executable instructions stored thereon, wherein the computer-executable instructions are executed by a processor to implement the method provided according to the first aspect of the present disclosure.

It should be understood that the content described in the summary section is not intended to define key or important features of the embodiments of the present disclosure, nor is it intended to limit the scope of the present disclosure. Other features of the present disclosure will become readily understood by the following description.

### Description of Attached Drawings

The above and other features, advantages, and aspects of various embodiments of the present disclosure will become more apparent in conjunction with the accompanying drawings and the following detailed description. In the drawings, the same or similar reference numerals denote the same or similar elements, wherein:
FIG. 1A shows a schematic diagram of an example environment in which multiple embodiments of the present disclosure can be implemented;
FIG. 1B shows a schematic diagram of an example process for designing a PCB according to some embodiments of the present disclosure;
FIG. 2A shows a flowchart of an example method for determining an element layout in a PCB according to some embodiments of the present disclosure;
FIG. 2B shows a flowchart of an example method for determining a wiring scheme in a PCB according to some embodiments of the present disclosure;
FIG. 3A shows a schematic diagram of an example process for parsing layout information according to some embodiments of the present disclosure;
FIG. 3B shows a schematic diagram of an example initialized layout according to some embodiments of the present disclosure;
FIG. 4 shows a flowchart of an example method for determining an element layout in a PCB according to further embodiments of the present disclosure;
FIG. 5 shows a flowchart of an example method for determining an estimated wiring length according to some embodiments of the present disclosure;
FIG. 6 shows a flowchart of an example method for determining an estimated congestion level according to some embodiments of the present disclosure;
FIG. 7 shows a block diagram of an example apparatus for determining an element layout in a PCB according to some embodiments of the present disclosure; and
FIG. 8 shows a block diagram of a device capable of implementing multiple embodiments of the present disclosure.

### Detailed Description of the Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

**In** the description of the examples of the present disclosure, the term "comprise" and other similar expressions should be understood as open-ended inclusion, that is, "comprising but not limited to." The term "based on" should be understood as "at least partially based on." The term "one example" or "this example" should be understood as "at least one example." The terms "first", "second", etc. may refer to different or the same object. Other explicit and implicit definitions may be included below.

It should be understood that when an element is referred to as "connected" or "coupled" to another element, it may be directly connected or coupled to other elements or intermediate elements may be present. Conversely, there will be no intermediate element when the element is referred to as a "direct connection" or "direct coupling" to another element. Other words used to describe the relationship between elements should be resolved in a similar manner (e.g., "between" and "directly between", "adjacent" and "directly adjacent", etc.).

As discussed above, tools in related technologies primarily provide basic circuit routing functions and are typically limited to identifying the shortest paths between components when selecting traces. However, they significantly lack comprehensive global optimization capabilities for layout design and lack automated layout functionality. Therefore, the results obtained using circuit-assisted design tools in related technologies are often poor, still requiring a certain degree of reliance on manual intervention and user experience to achieve satisfactory layout and routing results. Furthermore, such solutions requiring manual intervention not only demand substantial manual effort but also introduce variability and potential inefficiencies into the design process. In view of this,
embodiments of the present disclosure provide a solution for determining a PCB layout by simultaneously considering wiring length, overlap area, and congestion. In this solution, when designing a PCB layout, wiring length, overlap area, and congestion are considered concurrently, enabling the achievement of high-performance layouts and thereby avoiding subsequent manual intervention. Thus, the problems of low efficiency and high manual workload in the PCB design process are addressed. Consequently, PCB layout is transformed from a primarily manual and experiential process to a semi-automated or fully automated one, significantly improving the efficiency, accuracy, and standardization of PCB design.

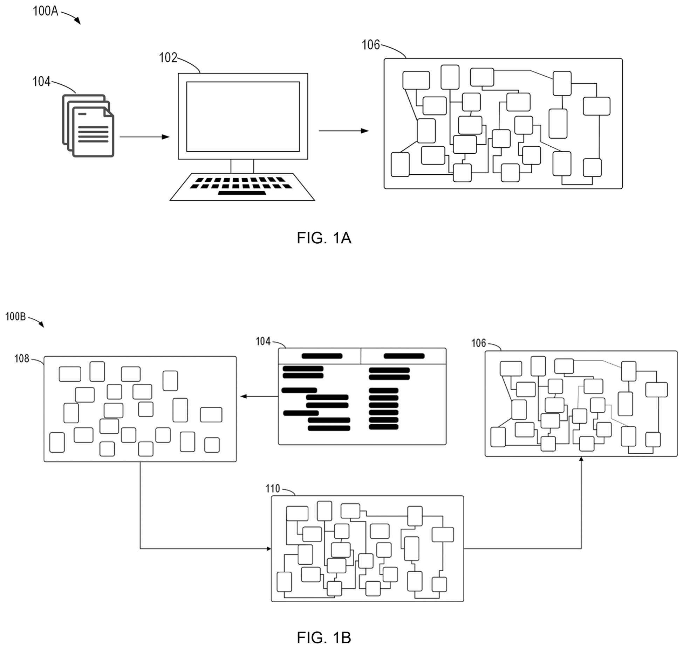

The solutions and principles of the embodiments of the present disclosure will be described in detail below with reference to FIGS. 1A to 6. FIG. 1A shows a schematic diagram of an example environment 100A in which multiple embodiments of the present disclosure can be implemented. As shown in FIG. 1A, environment 100A includes a computing device 102. The computing device 102 may be, for example, any electronic device capable of providing computing resources. A user may utilize the computing device 102 for assisted design of PCBs. For example, the user may input layout information 104 of a target PCB to be designed into the computing device 102. The layout information 104 may include, for example, size information of circuit elements on the PCB and connection relationships between circuit elements. The layout information 104 may also include other design parameters defined by the user. In some embodiments, the layout information 104 may be a PCB board diagram generated by the user using existing EDA tools and awaiting optimization. Upon receiving the layout information 104 of the target PCB input by the user, the computing device 102 may execute a method for designing a PCB according to embodiments of the present disclosure to obtain an optimized PCB board 106. The specific process for designing a PCB will be described below with reference to FIG. 1B.

FIG. 1B shows a schematic diagram of an example process 100B for designing a PCB according to some embodiments of the present disclosure. As shown in FIG. 1B, process 100B includes generating an initial layout 108 based on the layout information 104. Subsequently, based on the initial layout 108, the PCB is laid out to obtain a target layout 110. In some examples, PCB layout may include determining the board outline size and shape. For example, based on the mechanical structure requirements and installation space constraints of the product, the external dimensions and shape of the PCB are determined. For instance, for a PCB to be installed inside a circular housing, it may need to be designed in a circular or near-circular shape. PCB layout also includes planning layout areas. For example, the PCB is divided into different functional areas, such as power supply areas, digital circuit areas, analog circuit areas, etc. PCB layout may further include placing key components. For example, key components with special positional requirements are placed first, such as interface connectors, crystal oscillators, large-scale integrated circuit chips, etc. The positions of these components are typically constrained by factors such as mechanical structure, signal transmission paths, or electromagnetic compatibility (EMC). For instance, interface connectors should be placed at the edge of the PCB to facilitate connection with external devices; crystal oscillators should be placed as close as possible to the chips requiring their clock signals to reduce signal transmission delays and interference. Finally, PCB layout may also include placing the remaining components: After placing the key components, the remaining components are gradually placed according to signal flow and functional relevance. During placement, the spacing between components must be considered to meet manufacturing process requirements (avoiding short circuits between components) and heat dissipation requirements (for heat-generating components). Simultaneously, attention must be paid to whether the component layout facilitates subsequent routing work, minimizing routing crossovers and lengths.

In the embodiment shown in FIG. 1B, multiple candidate layouts can be obtained. The multiple candidate layouts may be obtained, for example, by fine-tuning the initial layout 108. Fine-tuning may include translating circuit elements, rotating circuit elements, and swapping two circuit elements. Subsequently, a target layout 110 may be selected from the candidate layouts based on key parameters of a certain layout. After determining the target layout 110, routing is performed to obtain the designed PCB board 106. PCB routing typically needs to follow certain rules. Rules may include, for example, trace width, trace spacing, via size, routing layers, etc. For instance, for power lines, which need to carry larger currents, a wider trace width is usually set; for high-speed signal lines, appropriate trace spacing is set to reduce crosstalk.

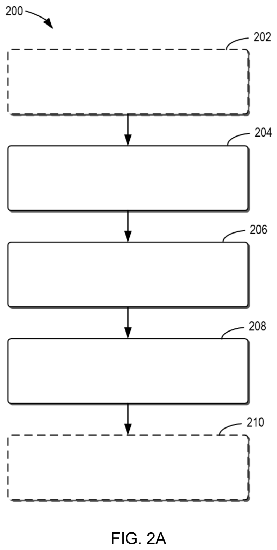

The solution for determining the component layout of a PCB according to embodiments of the present disclosure will be described below with reference to FIGS. 2A to 6. FIG. 2A shows a flowchart of an example method 200 for determining an element layout in a PCB according to some embodiments of the present disclosure. For discussion purposes, method 200 will be described in conjunction with FIG.s 1A and 1B. Method 200 may be executed, for example, by the computing device 102 shown in FIG. 1A.

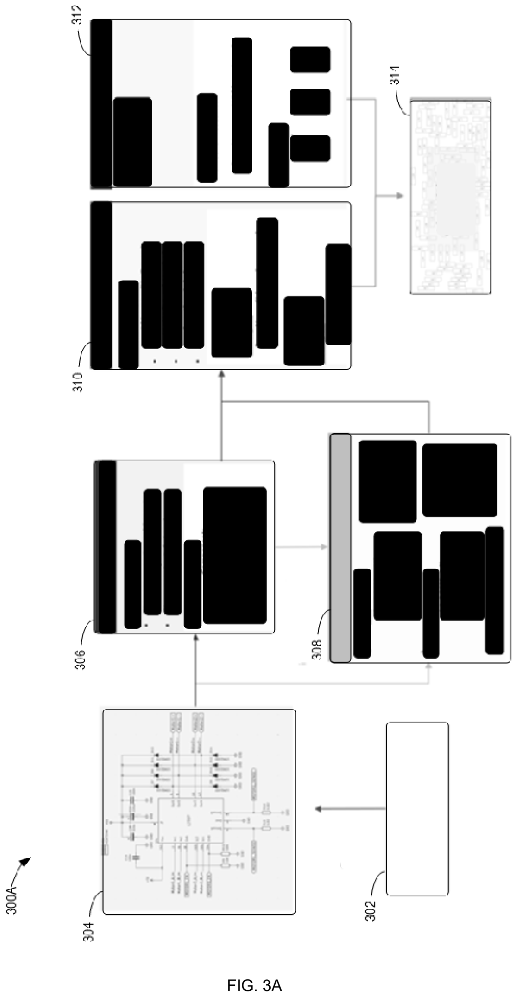

As shown in FIG. 2A, at 202, method 200 includes obtaining layout information of multiple circuit elements in a PCB. For example, in the embodiment shown in FIG. 1A, the computing device 102 may receive the layout information 104 and parse it according to predetermined rules. In some embodiments, the computing device 102 may obtain the layout information in its original format. Here, the layout information 104 received by the computing device 102 may have, for example, the file format of existing EDA tools. Subsequently, the computing device 102 may extract package information and netlist information of the PCB. Finally, the computing device 102 may generate layout information in a target format based on the package information and netlist information. Here, the target format includes the sizes of the multiple circuit elements and the connection relationships between the multiple circuit elements. The process of parsing the layout information 104 in a first format will be described below with reference to FIG. 3A.

FIG. 3A shows a schematic diagram of an example process 300A for parsing layout information according to some embodiments of the present disclosure. As shown in FIG. 3A, after designing with existing EDA tools, the user obtains layout information 302 in an original format. At this point, the user can input the layout information 302 into the computing device and use a converter within the computing device to convert the layout information 302 into a layout file 304 with an intermediate format that can be read by other tools. Subsequently, the computing device can extract netlist information 306 and footprint (component package) information 308 from the layout file 304. After that, the computing device can parse the netlist information 306 and the footprint information 308 to obtain network information 310 indicating the connection relationships of the circuit elements and component information 312 indicating the size information of the circuit elements. The obtained network information 310 and component information 312 can be input into an algorithm 314 to perform subsequent steps according to method 200.

Returning to FIG. 2A, at 204, method 200 includes determining multiple candidate layouts for multiple circuit elements based on layout information of the multiple circuit elements in the PCB. For example, in the embodiment shown in FIG. 1A, the computing device 102 can determine an initial layout based on the layout information of the multiple circuit elements in the PCB, and then determine multiple candidate layouts for the multiple circuit elements.

In some embodiments, when determining the initial layout, the computing device 102 may first determine multiple component sizes of the multiple circuit elements indicated by the layout information, and determine multiple maximum spacings and multiple minimum spacings for the multiple circuit elements based on the multiple component sizes and the panel size. In some embodiments, the circuit elements are arranged on the panel in a certain order. For example, circuit elements with more connection paths are typically larger and more important, and thus are prioritized for placement.

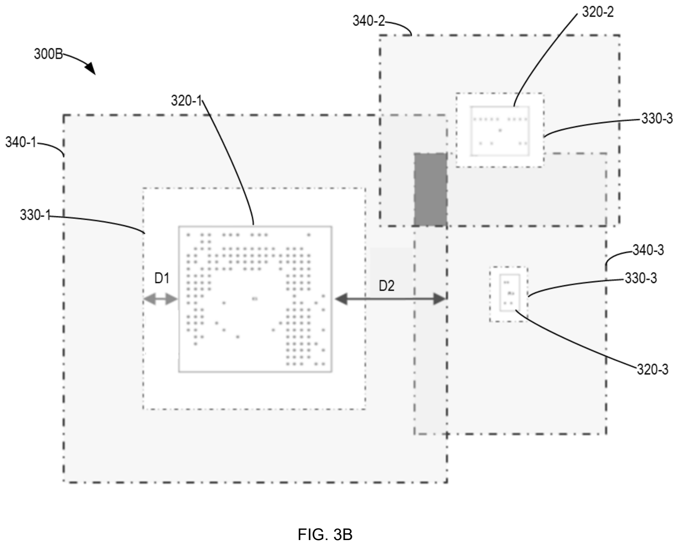

In some specific embodiments, the computing device 102 can determine multiple connection counts of the multiple circuit elements indicated by the layout information. Subsequently, the computing device 102 can determine an arrangement order of the multiple circuit elements based on the multiple connection counts. Finally, the computing device 102 arranges the multiple circuit elements sequentially according to the arrangement order, such that a subsequently placed circuit element is located within a space between a maximum spacing and a minimum spacing for an adjacent, previously placed circuit element. For example, the multiple circuit elements include a first circuit element and a second circuit element arranged sequentially, with the second circuit element located within a space between a maximum spacing and a minimum spacing for the first circuit element. The process of arranging the initial layout will be described below with reference to FIG. 3B.

FIG. 3B shows a schematic diagram of an example initialized layout 300B according to some embodiments of the present disclosure. As shown in FIG. 3B, layout 300B includes circuit element 320-1, circuit element 320-2, and circuit element 320-3. When determining the initial layout, the computing device 102 may, for example, determine the arrangement order of the circuit elements based on the number of connection paths of the circuit elements. For example, circuit element 320-1 is larger and has more pins to form more connections. Therefore, circuit element 320-1 is placed first. Subsequently, circuit element 320-2 and circuit element 320-3 are placed in sequence. In the embodiment shown in FIG. 3B, the first few placed circuit elements may not adhere to the maximum and minimum spacing rules, ensuring sufficient space to place multiple associated circuit elements.

After that, when placing additional circuit elements, the maximum and minimum spacings between circuit elements need to be considered. As shown in FIG. 3B, circuit element 320-1 has a minimum spacing border 330-1. The distance D1 from the minimum spacing border 330-1 to the edge of the circuit element is the minimum spacing. In some embodiments, the minimum spacing can be determined based on the size of the circuit element and the panel size of the PCB. For example, a horizontal ratio of the total horizontal dimension of a row of circuit elements to the horizontal panel dimension of the PCB, or a vertical ratio of the total vertical dimension of a column of circuit elements to the vertical panel dimension of the PCB, can first be determined. Subsequently, the minimum spacing is determined using the horizontal or vertical ratio and the short side of the circuit element.

Correspondingly, circuit element 320-1 has a maximum spacing border 340-1. The distance D2 from the maximum spacing border 340-1 to the edge of the circuit element is the maximum spacing. Similarly, the maximum spacing can be determined using the horizontal or vertical ratio and the long side of the circuit element. Correspondingly, circuit element 320-2 has a minimum spacing border 330-2 and a maximum spacing border 340-2. At the same time, circuit element 320-3 has a minimum spacing border 330-3 and a maximum spacing border 340-3. For example, in the embodiment shown in FIG. 3B, when a new circuit element adjacent to circuit element 320-1, circuit element 320-2, and circuit element 320-3 needs to be placed, the new circuit element will be placed within the space between the maximum spacing border 340-1 and the minimum spacing border 330-1 for circuit element 320-1, and also within the space between the maximum spacing border 340-2 and the minimum spacing border 330-2 for circuit element 320-2, and further within the space between the maximum spacing border 340-3 and the minimum spacing border 330-3 for circuit element 320-3. That is, it is placed within the space between the maximum spacing range and the minimum spacing range for all previously placed circuit elements adjacent to the subsequently placed new circuit element.

The maximum and minimum spacings of circuit elements can not only serve as constraint rules for placing circuit elements but can also be used for subsequent calculations. **In** some embodiments, when placing circuit elements, additional placement rules can be set besides the spacing constraint rules.

Returning to FIG. 2A, at 206, method 200 includes determining respective multiple wiring lengths, multiple element overlap areas, and multiple wiring congestion levels for the multiple candidate layouts. For example, in the embodiment shown in FIG. 1A, the computing device 102 calculates the corresponding wiring length, element overlap area, and wiring congestion level for each candidate layout. In some embodiments, once the layout is determined, the positions of the circuit elements, i.e., the coordinates of the circuit elements on the panel, are already determined. At this point, the wire length can be calculated using the coordinates of two connected pins. Since actual routing is not performed during the layout stage, the wiring length and wiring congestion level cannot be accurately calculated. To address this, the computing device 102 can also use certain algorithms to estimate the wiring length and wiring congestion level of the multiple circuit elements in each candidate layout. For example, the wiring length can be represented by the half-perimeter wirelength. It should be understood that as long as the representation of wire length and congestion level is consistent for each layout, subsequent comparisons can be performed. Therefore, all feasible wiring and congestion levels can be represented by any other method.

At 208, method 200 includes determining a target layout from the multiple candidate layouts based on the multiple wiring lengths, the multiple element overlap areas, and the multiple wiring congestion levels. For example, in the embodiment shown in FIG. 1A, the computing device 102 may determine the target layout based on a weighted sum of the wiring length, overlap area, and wiring congestion level. For instance, the computing device 102 may select the candidate layout with the smallest weighted sum as the target layout.

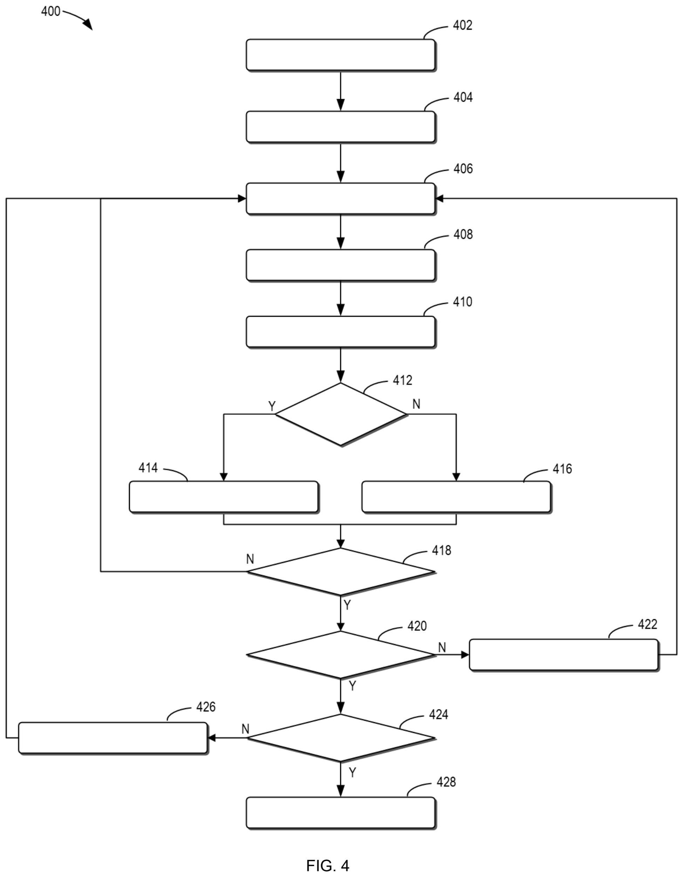

In some embodiments, steps 204 to 208 may be implemented using a simulated annealing algorithm. The simulated annealing algorithm is a metaheuristic algorithm. This algorithm is based on a probabilistic search strategy that allows for the possibility of accepting inferior solutions in the search space to avoid getting trapped in local optima. The simulated annealing algorithm simulates the process of material cooling by gradually reducing the temperature during the search process, thereby finding a global optimum or a near-optimal solution. The simulated annealing algorithm exhibits excellent performance in layout optimization due to its global search capability and randomness. The simulated annealing algorithm can perform a global search in the search space, avoiding entrapment in local optima, and increases the diversity of the algorithm by introducing randomness, thereby helping to discover better solutions. Furthermore, the simulated annealing algorithm is also flexible, adaptable to different problem domains and objective functions, and can be adjusted and optimized according to requirements. The specific implementation based on the simulated annealing algorithm will be described later with reference to FIG. 4.

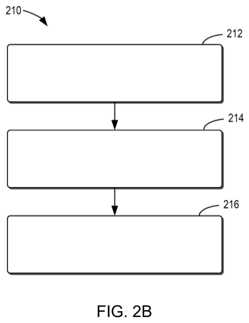

After determining the layout, at 210, method 200 further includes determining a target wiring scheme based on the target layout. FIG. 2B shows a flowchart of an example method 210 for determining a wiring scheme in a PCB according to some embodiments of the present disclosure. For discussion purposes, method 210 will be described in conjunction with FIG.s 1A and 1B. Method 210 may be executed, for example, by the computing device 102 shown in FIG. 1A. As shown in FIG. 2B, at 212, the computing device 102 obtains multiple candidate wiring schemes for the target layout. At 214, the computing device 102 determines multiple crossover degrees, multiple via counts, and multiple wire spacings for the multiple wiring schemes, respectively. Finally, at 216, the computing device 102 determines the target wiring scheme based on the multiple crossover degrees, multiple via counts, and multiple wire spacings.

In some embodiments, method 210 may also be executed using a simulated annealing algorithm. In such embodiments, the simulated annealing algorithm may include initialization. During initialization, an initial solution, initial temperature, and iteration count are set. The initial solution may be randomly generated or determined based on some prior knowledge. For example, the initial layout may be determined according to the method described in the embodiment shown in FIG. 3B. The initial temperature is higher than the final temperature and determines the probability of accepting inferior solutions in the initial stage. The higher the temperature, the greater the probability of accepting inferior solutions. Since the number of candidate solutions cannot be exhaustively enumerated, setting the iteration count can limit the maximum number of iterations at each temperature. After initialization, iteration begins.

During the iteration process, a new solution is generated from the neighborhood of the current solution. For example, in the current wiring scheme, change the routing direction of one or more wires. After determining the new solution, calculate the difference in the objective function that indicates the quality of the layout of the current wiring scheme. That is, calculate the difference between the objective function value of the new solution and the objective function value of the current solution. For example, the objective function (also referred to as layout quality) may be a weighted sum of crossover degree, via count, and wire spacing. The objective function difference determines whether to accept or reject the new solution. If the objective function difference indicates that the new solution is better, accept the new solution as the current solution. If the objective function difference indicates that the current solution is better, accept the new solution with a certain probability. Here, the probability is associated with the current temperature. For example, the probability is a function value with the current temperature as the variable. After completing the iterations at a given temperature, update the temperature according to the cooling schedule. Finally, when the temperature decreases to a set termination temperature or the maximum iteration count is reached, the algorithm terminates and returns the best solution found so far.

According to the embodiments shown in FIGS. 2A and 2B, by simultaneously considering wiring length, circuit element overlap area, and wiring congestion level, a layout with better performance can be determined. This avoids the situation where the layout results generated by existing EDA tools have poor performance and require manual intervention. Furthermore, in embodiments utilizing the simulated annealing algorithm and related improvements, PCB layout can be transformed from a primarily manual and experiential process to a semi-automated or fully automated one. This transformation significantly improves the efficiency, accuracy, and standardization of PCB design. During the layout and routing stages, constraint rules are also set to ensure that candidate layouts or wiring schemes satisfy predetermined constraints. Such constraints may include, for example, no overlap, minimum spacing distance, etc. A general rule-checking mechanism set up during the layout and routing process helps avoid most errors during routing.

FIG. 4 shows a flowchart of an example method 400 for determining component layout in a PCB based on a simulated annealing algorithm according to further embodiments of the present disclosure. For discussion purposes, method 200 will be described in conjunction with FIG.s 1A and 1B. Method 200 may be executed, for example, by the computing device 102 shown in FIG. 1A. Method 400 includes three nested loops. The outermost loop gradually reduces the panel size. The middle loop reduces the temperature for a given panel size to find the optimal solution for the current panel. The innermost loop iterates at each temperature to find the optimal solution at the current temperature.

As shown in FIG. 4, at 402, the computing device 102 performs initialization to define parameters for executing the scheme for designing PCB circuits according to embodiments of the present disclosure. Parameters include, for example, the initial panel size of the PCB, the target panel size, and the reduction step size for panel size iteration. In some embodiments, the target panel size is the panel size specified by the design, and the initial panel size is obtained by expanding the target panel size. Parameters also include the initial temperature, final temperature, and temperature cooling step size for the annealing algorithm. Furthermore, during initialization, an initial solution is also determined, i.e., the initial layout of multiple circuit elements on a panel having the initial panel size. Parameters of the initial layout include module positions, sizes, module indices, etc., for each module. At 404, the computing device 102 calculates the objective function value of the initial layout as the current layout, which serves as the current objective function value. Here, the objective function characterizes layout quality. Iteration now begins.

At 406, the computing device 102 perturbs the current layout to generate a new layout. At 408, the computing device 102 calculates the objective function value of the new solution. This objective function is the same as the one used at 404. Here, the objective function is a weighted sum of wiring length, element overlap area, and wiring congestion level. The weights for overlap area and wiring congestion level may be derived based on the current temperature as a weight base. The computing device 102 first calculates the predicted wiring length, element overlap area, and predicted wiring congestion level using a certain algorithm. Then, the computing device 102 calculates the weighted sum of wiring length, element overlap area, and wiring congestion level to obtain the objective function value.

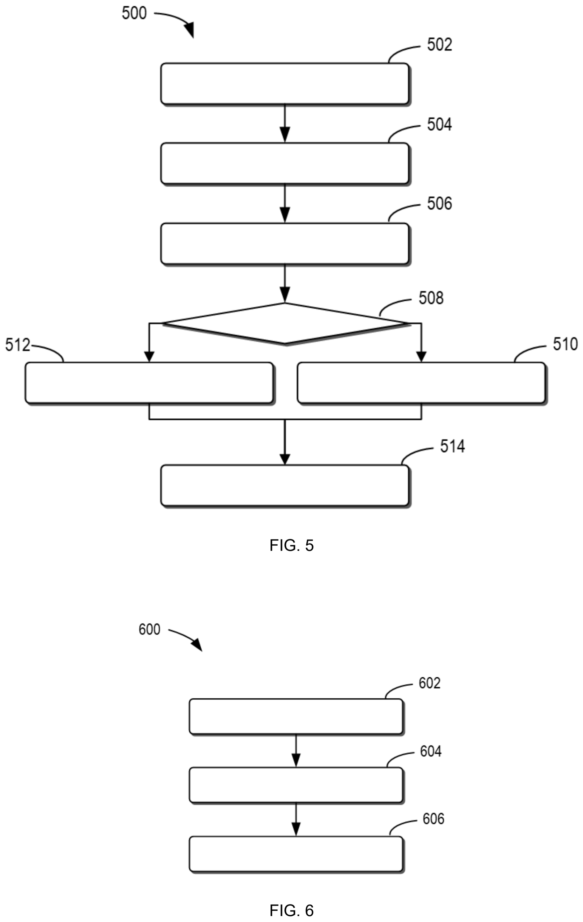

In some embodiments, the computing device 102 may calculate the wiring length and wiring congestion level based on the current panel size and the coordinates of the components in the current layout. Additionally, the computing device 102 may also determine the element overlap area based on the positions and sizes of the circuit elements. The method for calculating the wiring length will be described below with reference to FIG. 5, and the method for calculating the congestion level will be described with reference to FIG. 6.

FIG. 5 shows a flowchart of an example method for determining an estimated wiring length according to some embodiments of the present disclosure. For discussion purposes, method 500 will be described in conjunction with FIG.s 1A and 1B. Method 500 may be executed, for example, by the computing device 102 shown in FIG. 1A.

As shown in FIG. 5, at 502, the computing device 102 determines multiple positions of multiple circuit elements on the PCB under one candidate layout among multiple candidate layouts. At 504, the computing device 102 determines the positions of the pins of the circuit elements, i.e., the coordinates of the pins, based on the multiple positions. At 506, the computing device 102 determines the half-perimeter wirelength for connecting two pins based on the pin positions. At 508, the computing device 102 determines whether the two pins are on the same panel. If the computing device 102 determines, via the panel index of the network, that the two pins are on the same board surface, the method 500 proceeds to 510. At 510, the computing device 102 determines the half-perimeter wirelength between the two pins as a length component. If the computing device 102 determines that the two pins are on opposite board surfaces, the method 500 proceeds to 512. At 512, the computing device 102 determines the length component based on the half-perimeter wirelength between the two pins and the thickness of the PCB. For example, the computing device 102 may add the half-perimeter wirelength to the thickness and a certain tolerance to obtain the length component. At 514, the computing device 102 sums all length components obtained after traversing all pins to obtain the wiring length under the current layout.

FIG. 6 shows a flowchart of an example method for determining an estimated congestion level according to some embodiments of the present disclosure. For discussion purposes, method 600 will be described in conjunction with FIG.s 1A and 1B. Method 600 may be executed, for example, by the computing device 102 shown in FIG. 1A.

As shown in FIG. 6, at 602, the computing device 102 may determine multiple networks in the current candidate layout, for example, based on netlist information. At 604, the computing device 102 may determine the distribution of multiple pins in the multiple networks based on the circuit element positions. In some embodiments, the distribution indicates the positions of connections between pins in a network. At 608, the computing device 102 determines the congestion level based on the distribution. In some embodiments, the congestion level may be characterized by the ratio of the span of connections between pins in a network to the span of the network itself.

Returning to FIG. 4, at 410, the computing device 102 calculates the difference between the current objective function value and the objective function value of the new solution. At 412, the computing device 102 determines whether the difference is less than 0. If the computing device 102 determines that the difference is less than 0, it indicates that the performance of the new candidate layout is inferior to that of the current layout, and the method 400 proceeds to 414. At 414, the computing device 102 accepts the updated layout as the new layout with a certain acceptance probability. Here, the probability is a function of the annealing temperature. For example, the computing device 102 may randomly generate a random number between 1 and 0. When this random number is greater than the probability, the computing device 102 accepts the new candidate layout as the current layout. Otherwise, the computing device 102 retains the current layout.

Conversely, if the computing device 102 determines that the difference is greater than 0, it indicates that the performance of the new candidate layout is superior to that of the current layout, and the method proceeds to 416. At 416, the computing device 102 accepts the new candidate layout as the current layout.

At 418, the computing device 102 determines whether the number of iterations has reached a predetermined threshold. If the computing device 102 determines that the number of iterations has not reached the predetermined threshold, the method 400 returns to 406 to generate a new candidate layout and start the next cycle. If the computing device 102 determines that the number of iterations has reached the predetermined threshold, the method 400 proceeds to 420. At 420, the computing device 102 determines whether the current temperature has reached the end temperature. If the computing device 102 determines that the current temperature has not yet reached the end temperature, the method proceeds to 422. At 422, the computing device 102 updates the current temperature according to a preset cooling step. Thereafter, the method 400 returns to 406 to generate a new candidate layout and start a cycle under the new current temperature.

Conversely, if the computing device 102 determines that the current temperature has reached the end temperature, the method proceeds to 424. At 424, the computing device 102 determines whether the current panel size has reached the target panel size. If the computing device 102 determines that the current panel size has not yet reached the target panel size, the method proceeds to 426. At 426, the computing device 102 updates the current panel size according to a preset reduction step. Thereafter, the method 400 returns to 406 to generate a new candidate layout and start a cycle under the new current panel size.

If the computing device 102 determines that the current panel size has reached the target panel size, the method proceeds to 428. At 428, the method 400 ends and returns the current layout as the target layout. It should be understood that the layouts obtained at 406 can all be regarded as candidate layouts according to embodiments of the present disclosure.

According to the embodiment shown in FIG. 4, in the layout phase, an algorithm is used for initialization before simulated annealing (SA) to avoid converging to a local optimum. During the layout optimization process, the size of the circuit board is gradually reduced from approximately twice the required size to the original size, which provides SA with greater freedom in the initial stage to find better solutions.

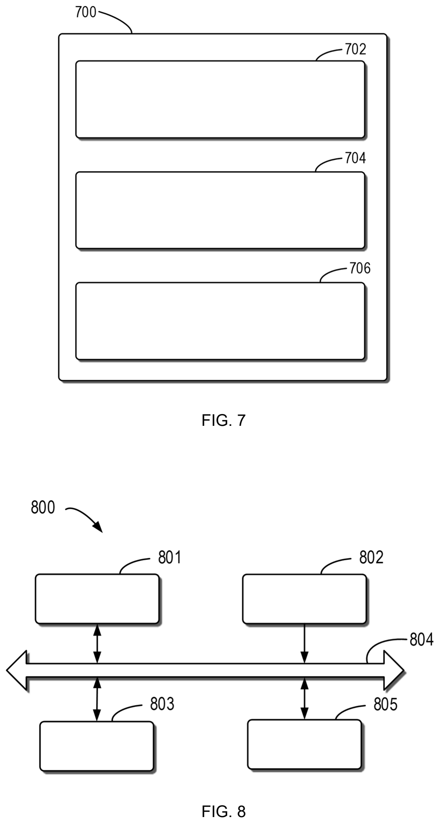

FIG. 7 shows a block diagram of an example apparatus 700 for determining magnet parameters of a motor rotor according to some embodiments of the present disclosure. As shown in FIG. 7, the apparatus 700 includes a candidate layout determination module 702, configured to determine multiple candidate layouts for multiple circuit elements based on layout information of the multiple circuit elements in a PCB. The apparatus 700 includes a layout parameter determination module 704, configured to determine respective multiple wiring lengths, multiple element overlap areas, and multiple wiring congestion levels for the multiple candidate layouts. The apparatus 700 includes a target layout determination module 706, configured to determine a target layout from the multiple candidate layouts based on the multiple wiring lengths, the multiple element overlap areas, and the multiple wiring congestion levels.

In some embodiments, the candidate layout determination module 702 includes: a target size determination unit configured to determine a target panel size of the PCB indicated by the layout information; a size expansion unit configured to expand the target panel size to a first panel size based on a predetermined first ratio; and an initial layout determination unit configured to determine a first initial layout of the multiple circuit elements on a first board surface having the first panel size.

In some embodiments, the initial layout determination unit includes: a size determination unit configured to determine multiple element sizes of the multiple circuit elements indicated by the layout information; a spacing determination unit configured to determine multiple maximum spacings and multiple minimum spacings for the multiple circuit elements based on the multiple element sizes and the first panel size; and a first layout determination unit configured to determine the first initial layout wherein spacings between the multiple circuit elements satisfy the multiple maximum spacings and multiple minimum spacings.

In some embodiments, the first layout determination unit includes: a count determination unit configured to determine multiple connection counts of the multiple circuit elements indicated by the layout information; an order determination unit configured to determine an arrangement order of the multiple circuit elements based on the multiple connection counts; and a second layout determination unit configured to arrange the multiple circuit elements sequentially according to the arrangement order, such that a subsequently arranged circuit element is positioned between a maximum spacing and a minimum spacing of an adjacent circuit element.

In some embodiments, the candidate layout determination module 702 includes: a first intermediate layout acquisition unit configured to adjust positions of one or more circuit elements among the multiple circuit elements in the first initial layout to obtain multiple first intermediate layouts; a first target intermediate layout determination unit configured to determine a first target intermediate layout based on wiring lengths, element overlap areas, and wiring congestion levels of the multiple circuit elements in the first initial layout and the multiple first intermediate layouts; a size reduction unit configured to reduce the first panel size to a second panel size; a second layout acquisition unit configured to adjust the first target intermediate layout to obtain multiple second intermediate layouts such that the multiple second intermediate layouts satisfy the second panel size; a second target intermediate layout determination unit configured to determine a second target intermediate layout based on wiring lengths, element overlap areas, and wiring congestion levels of the multiple circuit elements in the multiple second intermediate layouts; and a candidate layout determination unit configured to determine the multiple candidate layouts for the multiple circuit elements on a target panel having the target panel size based on the second target intermediate layout.

In some embodiments, the layout parameter determination module 704 includes: a position determination unit configured to determine multiple first positions of the multiple circuit elements on the PCB under a first candidate layout among the multiple candidate layouts; a wire length and congestion determination unit configured to determine a first wiring length and a first wiring congestion level for the first candidate layout based on the multiple first positions; and an overlap area determination unit configured to determine a first element overlap area based on the multiple first positions and multiple sizes of the multiple circuit elements.

In some embodiments, the wire length and congestion determination unit includes: a pin position determination unit configured to determine multiple pin positions of multiple pins of the multiple circuit elements based on the multiple first positions; a half-perimeter wirelength determination unit configured to determine a half-perimeter wirelength for connecting the multiple pins based on the multiple pin positions; and a first wiring length determination unit configured to determine the first wiring length based on the half-perimeter wirelength and board surfaces on which the multiple pins are located.

In some embodiments, the first wiring length determination unit includes: a board surface determination unit configured to determine board surfaces on which a first pin and a second pin among the multiple pins are located; a first component determination unit configured to, in response to determining that the first pin and the second pin are on the same board surface, determine a half-perimeter wirelength between the first pin and the second pin as a length component; or a second component determination unit configured to, in response to determining that the first pin and the second pin are on opposite board surfaces, determine the length component based on the half-perimeter wirelength between the first pin and the second pin and a thickness of the PCB; and a second wiring length determination unit configured to determine the first wiring length based on the length component.

In some embodiments, the wire length and congestion determination unit includes: a network determination unit configured to determine multiple networks in the first candidate layout; a distribution determination unit configured to determine a distribution of the multiple pins in the multiple networks based on the multiple first positions; and a congestion level determination unit configured to determine the first wiring congestion level based on the distribution.

In some embodiments, the target layout determination module 706 includes: a base acquisition unit configured to obtain multiple weight bases, an overlap ratio, and a congestion ratio; a weight determination unit configured to determine multiple overlap weights and multiple congestion weights based on the multiple weight bases, the overlap ratio, and the congestion ratio; a layout quality determination unit configured to determine layout quality for the multiple candidate layouts based on the multiple wiring lengths, the multiple element overlap areas, the multiple wiring congestion levels, and the multiple overlap weights and multiple congestion weights; and a target layout determination unit configured to determine a candidate layout among the multiple candidate layouts having the worst layout quality as the target layout.

In some embodiments, the target layout determination unit includes: a current layout determination unit configured to determine a first candidate layout among the multiple candidate layouts as a current target layout;
a second layout quality determination unit configured to determine a second layout quality associated with a second candidate layout; a probability determination unit configured to, in response to determining that the second layout quality is greater than a first layout quality of the first candidate layout, determine a selection probability based on a weight base; and a second target layout determination unit configured to determine the first candidate layout or the second candidate layout as the current target layout based on the selection probability.

In some examples, the apparatus 700 further comprises: a layout information acquisition module configured to acquire layout information having an original format; an information extraction module configured to extract package information and netlist information of the PCB; and a target information generation module configured to generate layout information having a target format based on the package information and the netlist information, wherein the target format includes sizes of the multiple circuit elements and connection relationships between the multiple circuit elements.

In some examples, the apparatus 700 further comprises: a candidate wiring acquisition module configured to acquire multiple candidate wiring schemes for the target layout; a wiring quality determination module configured to determine multiple crossover degrees, multiple via counts, and multiple wire spacings for the multiple wiring schemes; and a target wiring scheme determination module configured to determine a target wiring scheme based on the multiple crossover degrees, the multiple via counts, and the multiple wire spacings.

FIG. 8 illustrates a schematic block diagram of an exemplary device 800 that may be used to implement the examples of the present disclosure. As shown in the figure, the device 800 includes a processor 801, which can perform various appropriate actions and processes according to computer program instructions loaded from a computer program stored in a read-only memory (ROM) 802 into a random access memory (RAM) 803. Various programs and data required for the operation of the device 800 may also be stored in the RAM 803. The processor 801, the ROM 802, and the RAM 803 are interconnected through a bus 804. An input/output (I/O) interface 805 is also connected to the bus 804.

The various processes and treatments described above, such as 200, 210, and 400-600, can be executed by the processor 801. For example, in some embodiments, 200, 210, and 400-600 can be implemented as a computer software program tangibly contained in a machine-readable medium. In some embodiments, portions or all of the computer program can be loaded and/or installed onto device 800 via ROM 802. When the computer program is loaded into the RAM 803 and executed by the processor 801, one or more actions of the method 200, 210 and 400-600 described above may be performed.

The present disclosure may be a method, device, system, and/or computer program product. The computer program product may comprise a computer-readable storage medium uploaded with computer-readable program instructions for performing various aspects of the present disclosure.

The computer-readable storage medium may be a tangible device that maintains and stores instructions used to instruct execution devices. The computer-readable storage medium, for example, may be - but is not limited to - an electrical storage device, magnetic storage device, optical storage device, electromagnetic storage device, semiconductor memory device, or any suitable combination of the above. More specific examples of the computer-readable storage medium (a non-exhaustive list) comprise: random access memory (RAM), read-only memory (ROM), erasable programmable read-only memory (EPROM or flash memory), static random access memory (SRAM), and any suitable combination of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein may be downloaded to various computing/processing devices from computer-readable storage medium, or downloaded from networks, such as the Internet, a local area network, a wide-area network and/or a wireless network to external computers or external storage devices. The networks may comprise copper transmission cables, optical fiber transmissions, wireless transmissions, routers, firewalls, switches, gateway computers, and/or edge servers. The network adapter card or network interface in each computing/processing device receives the computer-readable program instructions from the network and forwards the computer-readable program instructions for storage in computer-readable storage medium of each computing/processing device.

The computer program instructions used to execute the operations of the present disclosure may be assembly instructions, instructions set architecture (ISA) instructions, machine instructions, machine-related instructions, microcode, firmware instructions, state-setting data, or source code or object code written with any combination of one or many programming languages, with the programming languages including object-oriented programming languages such as Smalltalk, C++, etc., as well as conventional procedural programming languages such as "C" language or similar programming languages. Computer-readable program instructions may be fully executed on the user's computer, partially executed on the user's computer, executed as an independent software package, partially executed on the user's computer and partially executed on a remote computer, or fully executed on a remote computer or server. Where a remote computer is involved, the remote computer may be connected to the user's computer through any type of network, including local area network (LAN) or wide area network (WAN), or it may be connected to an external computer (such as by using an Internet service provider for Internet connection). In some examples, the state information of computer-readable program instructions is used to personalize custom electronic circuits, such as a programmable logic circuit, field-programmable gate array (FPGA) or programmable logic array (PLA), wherein the electronic circuit is able to execute computer-readable program instructions, thereby achieving the various aspects of the present disclosure.

Various aspects of the present disclosure are described herein with reference to flow charts and/or block diagrams depicting methods, apparatus (systems), and computer program products according to the examples of the present disclosure. It should be understood that every block in the flow charts and/or block diagrams and the combinations of various blocks in the flow charts and/or block diagrams may be implemented by computer-readable program instructions.

These computer-readable program instructions may be supplied to a general-purpose computer, a special-purpose computer, or other programmable data processing apparatus to produce a machine, such that the instructions, when executed by the processing unit of the computer or other programmable data processing apparatus, create means for implementing the functions/actions specified in one or more blocks of the flowcharts and/or block diagrams. These computer-readable program instructions may also be stored on a computer-readable storage medium, these instructions causing a computer, a programmable data processing apparatus, and/or other devices to function in a particular manner. Accordingly, the computer-readable medium storing the instructions constitutes an article of manufacture that includes instructions for implementing various aspects of the functions/actions specified in one or more blocks of the flowcharts and/or block diagrams.

The computer-readable program instructions may also be loaded onto a computer, other programmable data processing apparatus, or other devices, causing a series of operational steps to be performed on the computer, other programmable data processing apparatus, or other devices to produce a computer-implemented process, such that the instructions executed on the computer, other programmable data processing apparatus, or other devices implement the functions/actions specified in one or more blocks of the flowcharts and/or block diagrams.

The flow charts and block diagrams in the accompanying drawings show the system architecture, functions and operations that may be implemented based on the systems, methods and computer program products according to the plurality of examples of the present disclosure. Regarding this, every block in the flow chart or block diagram can represent a part of a module, program section or instructions, wherein the part of the module, program section or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be substantially performed in a concurrent manner, and they may also sometimes be performed in reverse order, depending on the functions involved. It must also be noted that every block in the block diagrams and/or flow charts, as well as combinations of blocks in the block diagrams and/or flow charts may be implemented by dedicated hardware-based systems used to perform the stipulated functions or actions, or implemented by using combinations of dedicated hardware and computer instructions.

The various examples of the present disclosure have been described above. The descriptions provided are exemplary and not exhaustive, and they are also not limited to the disclosed examples. Many modifications and variations will be apparent to those skilled in the art without departing from the scope and spirit of the described examples. The selection of terms used in this text aims to best explain the principles and actual application of the various examples, the technological improvements in the technology in the market, or allow others of ordinary skill in the art to understand the various embodiments disclosed in this text.

## Claims

1. A method (200) for determining a circuit element layout, comprising:
determining (204) multiple candidate layouts for multiple circuit elements based on layout information of the multiple circuit elements in a printed circuit board (PCB);
determining (206) respective multiple wiring lengths, multiple element overlap areas, and multiple wiring congestion levels for the multiple candidate layouts; and
determining (208) a target layout from the multiple candidate layouts based on the multiple wiring lengths, the multiple element overlap areas, and the multiple wiring congestion levels.

2. The method (200) according to Claim 1, wherein determining (204) the multiple candidate layouts for the multiple circuit elements based on the layout information comprises:
determining a target panel size of the PCB indicated by the layout information;
expanding the target panel size to a first panel size based on a predetermined first ratio; and
determining a first initial layout of the multiple circuit elements on a first board surface having the first panel size.

3. The method (200) according to Claim 2, wherein determining the first initial layout of the multiple circuit elements on the first board surface having the first panel size comprises:
determining multiple element sizes of the multiple circuit elements indicated by the layout information;
determining multiple maximum spacings and multiple minimum spacings for the multiple circuit elements based on the multiple element sizes and the first panel size; and
determining the first initial layout wherein spacings between the multiple circuit elements satisfy the multiple maximum spacings and the multiple minimum spacings.

4. The method (200) according to Claim 3, wherein determining the first initial layout wherein spacings between the multiple circuit elements satisfy the multiple maximum spacings and the multiple minimum spacings comprises:
determining multiple connection counts of the multiple circuit elements indicated by the layout information;
determining an arrangement order of the multiple circuit elements based on the multiple connection counts; and
arranging the multiple circuit elements sequentially according to the arrangement order, wherein the multiple circuit elements includes a first circuit element and a second circuit element arranged sequentially, and the second circuit element is located within a space between a maximum spacing and a minimum spacing for the first circuit element.

5. The method (200) according to Claim 2, wherein determining (204) the multiple candidate layouts for the multiple circuit elements based on the layout information further comprises:
adjusting positions of one or more circuit elements among the multiple circuit elements in the first initial layout to obtain multiple first intermediate layouts;
determining a first target intermediate layout based on wiring lengths, element overlap areas, and wiring congestion levels of the multiple circuit elements in the first initial layout and the multiple first intermediate layouts;
reducing the first panel size to a second panel size;
adjusting the first target intermediate layout to obtain multiple second intermediate layouts such that the multiple second intermediate layouts satisfy the second panel size;
determining a second target intermediate layout based on wiring lengths, element overlap areas, and wiring congestion levels of the multiple circuit elements in the multiple second intermediate layouts; and
determining the multiple candidate layouts for the multiple circuit elements on a target panel having the target panel size based on the second target intermediate layout.

6. The method (200) according to Claim 1, wherein determining the respective multiple wiring lengths, multiple element overlap areas, and multiple wiring congestion levels for the multiple candidate layouts based on the layout information comprises:
determining multiple first positions of the multiple circuit elements on the PCB under a first candidate layout among the multiple candidate layouts;
determining a first wiring length and a first wiring congestion level for the first candidate layout based on the multiple first positions; and
determining a first element overlap area based on the multiple first positions and multiple sizes of the multiple circuit elements.

7. The method (200) according to Claim 6, wherein determining the first wiring length for the first candidate layout based on the multiple first positions comprises:
determining multiple pin positions of multiple pins of the multiple circuit elements based on the multiple first positions;
determining a half perimeter wirelength for connecting the multiple pins based on the multiple pin positions; and
determining the first wiring length based on the half perimeter wirelength and board surfaces on which the multiple pins are located.

8. The method (200) according to Claim 7, wherein determining the first wiring length based on the half perimeter wirelength and the board surfaces on which the multiple pins are located comprises:
determining a board surface on which a pin among the multiple pins is located;
in response to determining that a first pin and a second pin are on the same board surface, determining a half perimeter wirelength between the first pin and the second pin as a length component;
in response to determining that the first pin and the second pin are on opposite board surfaces, determining the length component based on the half perimeter wirelength between the first pin and the second pin and a thickness of the PCB; and
determining the first wiring length based on the length component.

9. The method (200) according to Claim 7, wherein determining the first wiring congestion level for the first candidate layout based on the multiple first positions comprises:
determining multiple networks in the first candidate layout;
determining a distribution of the multiple pins in the multiple networks based on the multiple first positions; and
determining the first wiring congestion level based on the distribution.

10. The method (200) according to Claim 1, wherein determining the target layout from the multiple candidate layouts based on the multiple wiring lengths, the multiple element overlap areas, and the multiple wiring congestion levels comprises:
obtaining multiple weight bases, an overlap ratio, and a congestion ratio;
determining multiple overlap weights and multiple congestion weights based on the multiple weight bases, the overlap ratio, and the congestion ratio;
determining layout quality for the multiple candidate layouts based on the multiple wiring lengths, the multiple element overlap areas, the multiple wiring congestion levels, and the multiple overlap weights and multiple congestion weights; and
determining a candidate layout among the multiple candidate layouts having the worst layout quality as the target layout.

11. The method (200) according to Claim 10, wherein determining the candidate layout among the multiple candidate layouts having the worst layout quality as the target layout comprises:
determining a first candidate layout among the multiple candidate layouts as a current target layout;
determining a second layout quality associated with a second candidate layout;
in response to determining that the second layout quality is greater than a first layout quality of the first candidate layout, determining a selection probability based on a weight base; and
determining the first candidate layout or the second candidate layout as the current target layout based on the selection probability.

12. The method (200) according to Claim 1, further comprising:
obtaining multiple candidate wiring schemes for the target layout;
determining multiple crossover degrees, multiple via counts, and multiple wire spacings for the multiple candidate wiring schemes; and
determining a target wiring scheme based on the multiple crossover degrees, the multiple via counts, and the multiple wire spacings.

13. An apparatus (700) for determining a circuit element layout, comprising:
a candidate layout determination module (702), configured to determine multiple candidate layouts for multiple circuit elements based on layout information of the multiple circuit elements in a printed circuit board (PCB);
a layout parameter determination module (704), configured to determine respective multiple wiring lengths, multiple element overlap areas, and multiple wiring congestion levels for the multiple candidate layouts; and
a target layout determination module (706), configured to determine a target layout from the multiple candidate layouts based on the multiple wiring lengths, the multiple element overlap areas, and the multiple wiring congestion levels.

14. An electronic device (800), comprising:
at least one processor (801); and
a memory (802, 803), coupled to the at least one processor (801) and having instructions stored thereon, wherein the instructions, when executed by the at least one processor (801), cause the electronic device (800) to perform the method according to any one of Claims 1-12.

15. A computer program product, comprising computer-executable instructions, wherein the computer-executable instructions are executed by a processor to implement the method according to any one of Claims 1 to 12.
